# EUROPEAN PATENT APPLICATION

(11) **EP 4 831 755 A1**
(43) Date of publication of application: **28.10.2026**
(21) Application number: 24906559.0
(22) Date of filing: 20.12.2024
(51) Int. Cl.: G05B 19/042

(54) **EDITING METHOD FOR VARIABLE IN AUTOMATED PROCESS AND CONTROL METHOD FOR AUTOMATED PROCESS**

(30) Priority: 22.12.2023 CN 202311790944
(71) Applicant: Megarobo Technologies Co., Ltd., Beijing 102208 (CN)
(72) Inventor: ZHU, Hongcheng, Beijing 102208 (CN)
(74) Representative: Grünecker Patent- und Rechtsanwälte PartG mbB
(86) International application number: PCT/CN2024/141086
(87) International publication number: WO 2025/131088

(57) **Abstract**

An editing method for a variable in an automated process and a control method for an automated process. The editing method comprises: displaying a process editing interface, wherein the process editing interface comprises a flowchart of an automated process; on the basis of operation information of a first operation by a user on a script execution node in the flowchart, determining script information of a variable assignment instruction executed at the script execution node, wherein the script information of the variable assignment instruction includes information about the name of a target variable to be assigned and an expression used for calculating the value of the target variable; and storing the script information of the variable assignment instruction.

## Description

This application claims the priority to Chinese Patent Application No. 202311790944.9, titled "EDITING METHOD FOR VARIABLE IN AUTOMATED PROCESS AND CONTROL METHOD FOR AUTOMATED PROCESS", filed on December 22, 2023 with the China National Intellectual Property Administration, which is incorporated herein by reference in its entirety.

### FIELD

The present disclosure relates to the field of automation, and in particular to a method for editing a variable in an automated process, a method for controlling an automated process, a system for editing a variable in an automated process, a system for controlling an automated process, an electronic device, and a storage medium.

### BACKGROUND

In recent years, business processes and business logic in the field of automation become increasingly complex. Fixed, rigid processes can hardly meet ever-changing user requirements and application scenarios. The ability to quickly and flexibly respond to varying business requirements becomes a core competitiveness of control software for automated processes.

For example, during operation of an automated process, actual values of some variables in the process are acquired in real time, such as the actual number of times that a process is executed repeatedly, the actual duration of the primary operation of a device, and the like, thereby facilitating the optimized management of the automated process.

In the prior art, the actual values of some simple variables, such as the actual number of to-be-pipetted samples which is to be acquired before a liquid workstation performs a pipetting operation on samples, are typically acquired by manually inputting from a user through pop-up windows or by importing from a configuration file. However, since this method is hardcoded into the program, it is limited to the acquisition of values of variables that involve almost no computation, and values of complex variables that require operations such as logical operations or mathematical operations cannot be acquired through the program in real time.

### SUMMARY

In view of the above issues, the present disclosure is provided. According to a first aspect of the present disclosure, a method for editing a variable in an automated process is provided. The method comprises:
displaying a process editing interface, where the process editing interface comprises a flowchart of the automated process;
determining, based on operation information of a first operation which is performed by a user and is performed on a script execution node in the flowchart, script information of a variable assignment instruction executed at the script execution node, where the script information of the variable assignment instruction comprises information on a name of a target variable to be assigned and an expression for calculating a value of the target variable; and
storing the script information of the variable assignment instruction.

In a possible implementation, where before the storing the script information of the variable assignment instruction, the method further comprises:
verifying the script information of the variable assignment instruction to determine whether the script information of the variable assignment instruction is valid,
where in response to the script information of the variable assignment instruction being determined to be valid, the script information of the variable assignment instruction is stored.

In a possible implementation, the verifying the script information of the variable assignment instruction comprises:
verifying a syntax of the expression in the script information to determine whether the syntax of the expression in the script information is valid;
calculating a result of the expression and verifying the result of the expression to determine whether the expression is valid; and
determining, in response to both the syntax of the expression in the script information and the expression being determined to be valid, that the script information of the variable assignment instruction is valid.

In a possible implementation, in response to the syntax of the expression in the script information being determined to be valid, the result of the expression is calculated and verified.

In a possible implementation, the calculating a result of the expression and verifying the result of the expression comprises:
calculating the result of the expression based on a default value of an associated variable of the target variable comprised in the script information , where the associated variable of the target variable is involved in the expression of the target variable; and
determining whether a type of the calculated result of the expression is consistent with a type of the target variable, and determining, in response to the type of the calculated result of the expression being consistent with the type of the target variable, that the expression is valid.

In a possible implementation, the method further comprises:
determining, in response to a second operation performed by the user on the process editing interface, respective definition information of custom variables in the automated process, where the custom variables comprise the target variable; and
storing the definition information of the custom variables,
where the definition information comprises a name, a type, and a default value of each custom variable of the custom variables, and the type of the custom variable is a digital format of a value of the custom variable defined by the user.

In a possible implementation, the information on the name of the target variable to be assigned is a numeric identifier corresponding to the name of the target variable, and the definition information further comprises the numeric identifier corresponding to the name of the custom variable and a correspondence between the name and the numeric identifier,
before the verifying the script information of the variable assignment instruction, the method further comprises:
preprocessing the script information of the variable assignment instruction based on the correspondence, to replace the numeric identifier of the target variable and a numeric identifier of the associated variable of the target variable comprised in the variable assignment instruction with respective names of the target variable and the associated variable, and
the verifying the script information of the variable assignment instruction comprises:
   verifying the script information of the variable assignment instruction by using the names that replace the numeric identifiers.

In a possible implementation, the method further comprises:
adding, in response to a third operation performed by the user on the flowchart, the script execution node to the automated process.

In a possible implementation, the determining, based on the operation information of the first operation which is performed by the user and is performed on the script execution node in the flowchart, the script information of the variable assignment instruction executed at the script execution node comprises:
displaying, in response to the first operation performed by the user on the script execution node, a first variable editing interface, where the first variable editing interface comprises an input text box;
receiving the information on the name of the target variable inputted by the user using the input text box; and
receiving the expression for calculating the value of the target variable inputted by the user using the input text box.

In a possible implementation, the determining, based on the operation information of the first operation which is performed by the user and is performed on the script execution node in the flowchart, the script information of the variable assignment instruction executed at the script execution node comprises:
displaying, in response to the first operation performed by the user on the script execution node, a second variable editing interface, where the second variable editing interface comprises an instruction setting control corresponding to the variable assignment instruction; and
determining, based on operation information of a fourth operation performed by the user on the instruction setting control, the script information of the variable assignment instruction executed at the script execution node.

In a possible implementation, the determining, based on the operation information of the fourth operation performed by the user on the instruction setting control, the script information of the variable assignment instruction executed at the script execution node comprises:
displaying, in response to the fourth operation performed by the user on the instruction setting control, a third variable editing interface, where the third variable editing interface comprises a variable name selection control and an expression editing control;
determining, in response to a fifth operation performed by the user on the variable name selection control, the information on the name of the target variable; and
determining, in response to a sixth operation performed by the user on the expression editing control, the expression for calculating the value of the target variable.

In a possible implementation, the script execution node comprises at least one of: a first script execution node arranged before any device node of device nodes in the automated process, or a second script execution node arranged after the device node, and
the variable assignment instruction executed at the first script execution node is executed before a primary operation of the device node is performed, and the variable assignment instruction executed at the second script execution node is executed after the primary operation of the device node is performed.

According to a second aspect of the present disclosure, a method for controlling an automated process is provided, and the method comprises:
determining the script information of the variable assignment instruction executed at the script execution node in the automated process and storing the script information by using the method for editing the variable in the automated process described above before the automated process starts;
acquiring, when the automated process proceeds to the script execution node comprising the variable assignment instruction, the stored script information of the variable assignment instruction, where the script information of the variable assignment instruction comprises information on the name of the target variable to be assigned and the expression for calculating the value of the target variable;
performing syntax parsing on the script information of the variable assignment instruction to determine the name of the target variable and the expression; and
assigning a value to the target variable based on the name of the target variable and the expression.

According to a third aspect of the present disclosure, a system for editing a variable in an automated process is provided, and the system comprises:
a display module, configured to display a process editing interface, where the process editing interface comprises a flowchart of the automated process;
a determination module, configured to determine, based on operation information of a first operation which is performed by a user and is performed on a script execution node in the flowchart, script information of a variable assignment instruction executed at the script execution node, where the script information of the variable assignment instruction comprises information on a name of a target variable to be assigned and an expression for calculating a value of the target variable; and
a storage module, configured to store the script information of the variable assignment instruction.

According to a fourth aspect of the present disclosure, a system for controlling an automated process is provided, and the system comprises:
an editing module, configured to determine the script information of the variable assignment instruction executed at the script execution node in the automated process and storing the script information by using the method for editing the variable in the automated process described above before the automated process starts;
an acquisition module, configured to acquire, when the automated process proceeds to the script execution node comprising the variable assignment instruction, the stored script information of the variable assignment instruction, where the script information of the variable assignment instruction comprises information on the name of the target variable to be assigned and the expression for calculating the value of the target variable;
a determination module, configured to perform syntax parsing on the script information of the variable assignment instruction to determine the name of the target variable and the expression; and an assignment module, configured to assign a value to the target variable based on the name of the target variable and the expression.

According to a fifth aspect of the present disclosure, an electronic device, comprising a processor and a memory, is provided. The memory stores computer program instructions, and the computer program instructions, when executed by the processor, perform the method for editing the variable in the automated process and/or the method for controlling the automated process described above.

According to a sixth aspect of the present disclosure, a storage medium, storing program instructions, is provided. The program instructions, when executed, perform the method for editing the variable in the automated process and/or the method for controlling the automated process described above.

According to the above solution, a process editing interface is provided for a user, and script information of a variable assignment instruction executed at a script execution node is determined and stored through a human-computer interaction operation performed by the user on the interface. Since the script information includes the name of the target variable to be assigned and an expression for calculating the value of the target variable, personalized editing of methods for calculating values of various variables expected to be assigned with values in the process is achieved. Thus, without modifying program codes, the target variable expected to be assigned with a value is flexibly defined through simple operations, and the expression for calculating the value of the target variable is flexibly set. In this way, as long as the script is executed during the automated process, various variables are assigned with values rapidly and accurately. This solution is applicable to various usage scenarios of automated processes, to fully meet personalized data processing requirements of the user, thereby improving the efficiency in monitoring the automated process, facilitating optimized management of the automated process, and improving the user experience.

The above description is only an overview of the technical solutions of the present disclosure. To clearly understand the technical means of the present disclosure and implement them according to the description, and to make the above and other objectives, features, and advantages of the present disclosure apparent and understandable, specific embodiments of the present disclosure are explicitly described below.

### BRIEF DESCRIPTION OF THE DRAWINGS

The above and other objectives, features, and advantages of the present disclosure become apparent by describing the embodiments of the present disclosure in detail with reference to the drawings. The drawings are provided to further understand the embodiments of the present disclosure, and constitute a part of the specification. The drawings are used together with the embodiments of the present disclosure to explain the present disclosure, and do not limit the present disclosure. In the drawings, the same reference numerals generally represent the same components or steps.
FIG. 1 shows a flowchart of a method for editing a variable in an automated process according to an embodiment of the present disclosure;
FIG. 2 shows a schematic diagram of a part of an automated process according to an embodiment of the present disclosure;
FIG. 3 shows a flowchart of a method for editing a variable in an automated process according to another embodiment of the present disclosure;
FIG. 4 shows a flowchart of a method for controlling an automated process according to an embodiment of the present disclosure;
FIG. 5 shows a schematic block diagram of a system for editing a variable in an automated process according to an embodiment of the present disclosure;
FIG. 6 shows a schematic block diagram of a system for controlling an automated process according to an embodiment of the present disclosure; and
FIG. 7 shows a schematic block diagram of an electronic device according to an embodiment of the present disclosure.

### DETAILED DESCRIPTION

To make the objectives, technical solutions, and advantages of the present disclosure apparent, exemplary embodiments according to the present disclosure are described in detail below with reference to the drawings. Apparently, the described embodiments are only a part of the embodiments of the present disclosure, rather than all of the embodiments. It should be understood that the present disclosure is not limited by the exemplary embodiments described herein. Based on the embodiments of the present disclosure described in the present disclosure, all other embodiments obtained by those skilled in the art without creative efforts shall fall within the protection scope of the present disclosure.

To at least partially address the above technical issues, a method for editing a variable in an automated process is provided according to a first aspect of the present disclosure. The method according to embodiments of the present disclosure is applicable to automated processes in various fields. For simplicity, an automated process in an automation system in the biochemical field is taken as an example for detailed description hereinafter.

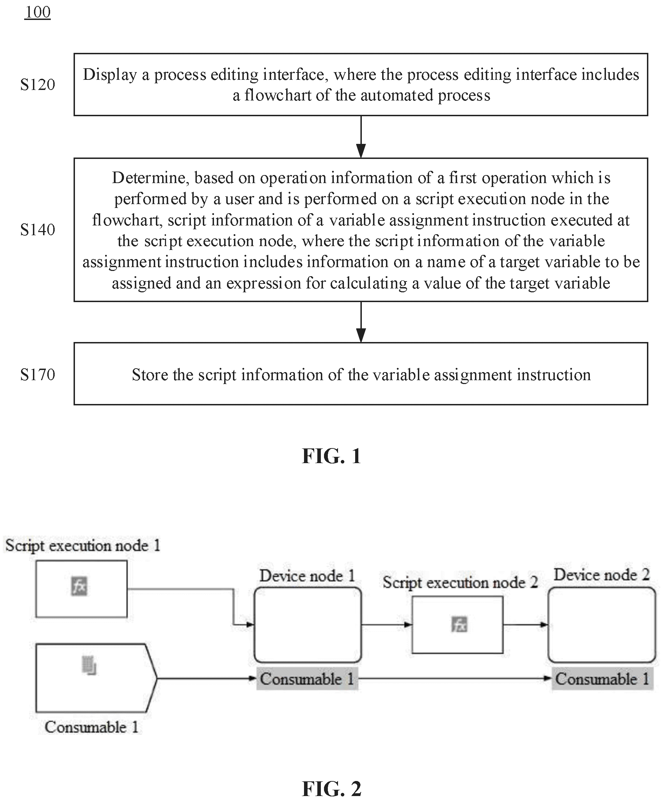

FIG. 1 shows a flowchart of a method 100 for editing a variable in an automated process according to an embodiment of the present disclosure. As shown in FIG. 1, the method 100 includes step S120, step S140, and step S170.

In step S120, a process editing interface is displayed, where the process editing interface includes a flowchart of the automated process.

According to an embodiment of the present disclosure, a user edits an automated process according to actual requirements before the automated process is performed by using a device of an automation system. In an embodiment, the user edits the automated process by using any suitable human-computer interaction device. In an embodiment, the human-computer interaction device includes a primary controller, and an input apparatus and a display apparatus which are connected to the primary controller. For example, the primary controller is a host computer, and an editing software for the automated process is installed in advance in an operating system of the host computer. In an embodiment, in response to an input operation performed by the user using the input apparatus, the process editing interface is displayed by using the display apparatus. The process editing interface may be displayed in any suitable form, which is not limited in the present disclosure.

The process editing interface at least includes the flowchart. The flowchart may be a complete flowchart or a partial flowchart of the automated process. By way of example and not limitation, the process editing interface displays the complete flowchart of the entire automated process by default. In response to different operations performed by the user using the input apparatus, the default flowchart is zoomed in or zoomed out, for example, enlarged display is shown. For example, after zooming in by a certain proportion, the flowchart displayed in the process editing interface may be a partial flowchart.

The flowchart may be formed by connecting multiple nodes in a certain connection order. Each of the multiple nodes may correspond to at least one task, and each of the multiple nodes corresponds to at least one respective task. In addition, the multiple nodes may include different types of nodes, and different types of nodes correspond to different types of tasks. In an embodiment, in the flowchart displayed in the process editing interface, display forms of different types of nodes may be different. For example, nodes are represented by icons, and the icons for different types of nodes may be different in shapes, fill colors, border colors, border thicknesses, and border sizes.

According to an embodiment of the present disclosure, the multiple nodes in the flowchart at least include a device node and a script execution node. For example, the multiple nodes in the flowchart further include other types of nodes, such as a consumable node and a loop node, which is not limited in the present disclosure.

The task corresponding to each device node includes a device operation performed at the device node. Each device node corresponds to one or more devices. The one or more devices corresponding to the device node at least include a primary device. The device operation performed at the device node at least includes a primary operation performed by the primary device. In some examples, the one or more devices corresponding to the device node further include an auxiliary device. The auxiliary device is configured to perform an auxiliary operation, where the auxiliary operation includes a pre-operation performed before the primary operation and/or a post-operation performed after the primary operation. The auxiliary device may include a transfer device such as a robotic arm, or an auxiliary operation device, such as a lid-opening device and a lid-closing device, that assists the primary operation. It can be understood that the transfer device may be configured to transfer a consumable for carrying a sample from a previous device node of a current device node to the current device node, allowing the primary device of the current device node to perform an operation on the sample carried by the consumable. The transfer device may further be configured to transfer the consumable from the current device node to a next device node of the current device node. In addition, each device node is associated with at least one consumable, and the consumables associated with different device nodes may be the same or different.

A respective task corresponding to each script execution node includes a data processing instruction executed at the script execution node. Each script execution node corresponds to at least one variable. The variable relates to data of device operations in the automated process. The data may be of various types, including but not limited to time involved in the device operations, the number of samples or consumables involved in the device operations, the number of executions of the device operations, etc., which are not limited in the present disclosure. The data processing instructions executed at the script execution node may include multiple types of instructions, including at least a variable assignment instruction. It is easy to understand that a variable assignment instruction is an instruction that assigns a value to a defined variable. When executing the variable assignment instruction, a value of a defined variable is determined by using a calculation method preconfigured in a script of the instruction. In some other examples, the data processing instructions further include other variable-related data processing instructions such as a variable export instruction, and a variable modification instruction.

Each script execution node may be connected to a device node. The data processing instruction executed at the script execution node is related to the device operation involved in the connected device node. It can be understood that the device operation involved in the device node is the device operation performed at the device node, which may include a primary operation performed by a primary device, and may further include a pre-operation and a post-operation which are performed by an auxiliary device. In an embodiment, a respective variable corresponding to each script execution node may be a variable of data related to the primary operation involved in the device node connected to the script execution node. For example, the variable may be a time variable such as a start time instant, an end time instant, and a duration, of the primary operation involved in the connected device node, or may be a count variable such as the number of the samples operated by the primary operation.

According to an embodiment of the present disclosure, the user sets the execution order of tasks corresponding to respective nodes of the automated process through the process editing interface. The flowchart of the automated process may further include lines connecting different nodes. The lines may include a directed line or an undirected line. The direction of the directed line may indicate the execution order of tasks corresponding to different nodes. For example, the directed line includes an arrow. The direction of the arrow may indicate the direction of process execution. In an embodiment, for two device nodes connected by a directed line, the device operation involved in the device node at the start point of the arrow is performed first, and the device operation involved in the device node at the end point of the arrow is performed later. In an embodiment, for a script execution node and a device node connected by a directed line, if the script execution node is arranged before the device node, the data processing instruction (e.g., a variable assignment instruction) corresponding to the script execution node is executed before the primary operation corresponding to the device node. It can also be understood that the data processing instruction executed at the script execution node is executed prior to the primary operation being performed at the device node. If the script execution node is arranged after the device node, the data processing instruction (e.g., a variable assignment instruction) corresponding to the script execution node is executed after the primary operation corresponding to the device node. It can also be understood that the data processing instruction executed at the script execution node is executed subsequent to the primary operation being performed at the device node. Therefore, expressions such as "a data processing instruction executed at a script execution node" herein may further be understood as "a data processing instruction corresponding to a script execution node".

In an embodiment, the script execution node includes a first script execution node arranged before any device node in the automated process and/or a second script execution node arranged after the device node, where a variable assignment instruction executed at the first script execution node is executed before a primary operation of the device node is performed, and a variable assignment instruction executed at the second script execution node is executed after the primary operation of the device node is performed. Reference is made below to FIG. 2. FIG. 2 shows a partial flowchart of an automated process according to an embodiment of the present disclosure. As shown in FIG. 2, the partial flowchart includes two device nodes and two script execution nodes. The device nodes and the script execution nodes are displayed in respective forms. The device nodes are represented by rounded rectangle frames filled with pure white, and the script execution nodes are represented by right-angle rectangle frames containing an icon with "fx". In addition, these four nodes are connected together by directed lines. The name of a node may be displayed near the node. For example, the name of a device node may be represented by the name of the device or a node numerical identifier. For example, in a case that the primary device corresponding to "device node 1" in FIG. 2 is a film remover, "film remover" may be directly displayed near the position of the device node. As shown in FIG. 2, the name of a script execution node may be represented by a node numerical identifier. It can be understood that for the four nodes shown in FIG. 2, if the tasks corresponding to the two script execution nodes both include a variable assignment instruction, the tasks corresponding to these four nodes are executed in an order of: the variable assignment instruction of "script execution node 1", the primary operation of "device node 1", the variable assignment instruction of "script execution node 2", and the primary operation of "device node 2". This facilitates the processing of data involved in the primary operation performed by the primary device, improving the efficiency in monitoring the automated process.

In an embodiment, the process editing interface further includes a process editing control. The user may edit the flowchart by using the process editing control. The process editing control may at least include a node addition control.

In an example, the device nodes in the flowchart are preset, and the script execution nodes may be added by the user using the node addition control. In an embodiment, the method 100 further includes step S111. In step S111, a script execution node is added to the automated process in response to a third operation performed by the user on the flowchart. The third operation may be any suitable human-computer interaction operation. For example, the input apparatus includes a mouse, and the process editing interface may include a script execution node addition control. In an embodiment, the third operation is an operation of the user dragging the script execution node addition control to the position of the device node. In an embodiment, the flowchart is displayed in the middle of the interface, and menu bars including the script execution node addition control are provided on both the left and right sides of the flowchart. If the user expects to add a script execution node before a device node, the user drags the script execution node addition control from the left menu bar to the right, to the position of the device node. If the user expects to add a script execution node after a device node, the user drags the script execution node addition control from the right menu bar to the left, to the position of the device node. After the user completes the dragging operation, the script execution node is displayed before or after the device node in the flowchart. Alternatively, the third operation is an operation of the user double-clicking the script execution node addition control with the mouse. For example, after the user double-clicks the script execution node addition control, a floating "script execution node 3" (not shown in FIG. 2) is displayed at any position on the flowchart shown in FIG. 2. In an embodiment, the process editing interface further includes a line control. After operation information of the user sequentially clicking the line control, "device node 2", and "script execution node 3" with the mouse is received, a new flowchart is displayed. In the new flowchart, "device node 2" is connected to a subsequent "script execution node 3". In other examples, the script execution node may further be added to the flowchart based on a third operation performed by the user using multiple input apparatuses. By way of example and not limitation, after clicking to select any device node with the mouse, the user may add a script execution node before or after the device node by using a keyboard shortcut. For example, after it is identified that the user presses the shortcut key "shift" + "←" using the keyboard, a script execution node may be added before the device node. After it is identified that the user presses the shortcut key "shift" + "→" using the keyboard, a script execution node may be added after the device node. Thus, the user can freely add script execution nodes through the process editing interface according to actual requirements, enabling the variable assignment instruction to be added at any node in the automated process. In this way, during execution of the automated process, the variable assignment instruction is executed only when the process proceeds to the corresponding node. Consequently, the timing of variable assignment in this solution can be freely set, fully meeting the personalized requirements of the user, improving the user experience, improving the efficiency in monitoring the automated process, thereby facilitating optimization and management of the automated process.

In another example, both the device nodes and the script execution nodes in the flowchart are added by the user through the node addition control in the process editing interface. Any suitable approach may be used to add device nodes, which is not limited in the present disclosure.

In step S140, based on operation information of a first operation which is performed by a user and is performed on a script execution node in the flowchart, script information of a variable assignment instruction executed at the script execution node is determined, where the script information of the variable assignment instruction includes information on a name of a target variable to be assigned and an expression for calculating a value of the target variable.

In this step, a script of the variable assignment instruction is added to a script execution node through a human-computer interaction operation. In this way, during execution of the automated process, when the process proceeds to the script execution node, the corresponding variable to-be-assigned is assigned a value by executing the script of the variable assignment instruction.

The target variable is the variable involved in the variable assignment instruction among variables corresponding to the current script execution node. In other words, the target variable is the to-be-assigned variable among the variables corresponding to the current script execution node. As mentioned above, a respective variable corresponding to each script execution node may be a variable of related data of the primary operation involved in the device node connected to the script execution node. the variable may be a time variable such as a start time instant, an end time instant, and a duration, of the primary operation involved in the connected device node, or may be a count variable such as the number of the samples operated by the primary operation. Referring again to FIG. 2, it is taken as an example that the primary device corresponding to "device node 2" is a liquid workstation. The target variable in "script execution node 2" may be, for example, an execution duration of a pipetting operation performed by the liquid workstation. In this step, based at least on the operation information of the first operation performed by the user on "script execution node 2", a variable assignment instruction for assigning a value to the variable representing the execution duration may be added to "script execution node 2", and the script information of the variable assignment instruction may be determined.

According to an embodiment of the present disclosure, the script information of the variable assignment instruction at least includes information on the name of the target variable and an expression for calculating the value of the target variable. The information on the name of the target variable may be represented in any suitable form. Taking it as an example that the target variable of "script execution node 2" in FIG. 2 is the execution duration of the pipetting operation, the information on the name of the target variable may be represented by a string such as "execution duration", or by a numeric identifier such as "0001". In addition, the information on the name of the target variable may further be represented in other forms, as long as the target variable can be distinguished from other variables through the information. The expression for calculating the value of the target variable may be represented in various forms such as an arithmetic expression, a comparison expression, a conditional expression, and a logical operation expression, which is not limited in the present disclosure. The following description is provided taking the expression for calculating the value of the target variable being an arithmetic expression as an example. It can be understood that an arithmetic expression may include constants, variables, functions, parentheses, operators, and the like. In an embodiment, the expression for calculating the value of the target variable includes at least one variable. In an embodiment, the expression for calculating the value of the target variable includes only one variable. This one variable may be the target variable or another variable. Alternatively, the expression for calculating the value of the target variable may include multiple variables. The variables included in the expression may be predefined variables set in advance in the system, or other custom variables defined by the user through human-computer interaction operations. For example, the predefined variables include a variable named "current time instant". It can be understood that in a case that the expression of the target variable includes the variable "current time instant", an actual time instant at that moment may be directly obtained and determined as the value of the variable "current time instant" when assigning a value to the target variable, and then the value of the target variable is calculated. Custom variables include, for example, time variables named "start time instant", "end time instant", etc., or numeric variables named "operation count", "sample quantity", etc.

The first operation may be any suitable human-computer interaction operation, which is not limited in the present disclosure. The first operation may include one operation or multiple operations performed sequentially. It is taken as an example that the input apparatus is a mouse. By way of example and not limitation, the first operation may be an operation in which the user clicks on the script execution node with the mouse. In an example, the first operation may include a double-click operation in which the user double-clicks the script execution node with the mouse. After the user double-clicks the script execution node, a new user interface may be displayed, or a new window may pop up based on the current process editing interface.

In an embodiment, the new user interface or window is a variable editing interface that directly allows the user to edit the script information of the variable assignment instruction. In other words, after the user performs the first operation on the script execution node, a variable editing interface for determining the script information of the variable assignment instruction is directly displayed. For example, the variable editing interface includes an input text box or various suitable operation controls. Based on operation information of an operation performed by the user on the input text box and/or operation controls, the script information of the variable assignment instruction executed at the script execution node is determined. In an embodiment, the variable editing interface includes a name script control. The name script control may be any suitable control such as an input text box or a drop-down selection box. The user may input the name of a defined target variable by operating the input text box or select the name of a defined target variable by using the drop-down selection box. In an embodiment, the target variable is predefined. In this step, the user may input or select the name of the predefined target variable. Alternatively, the target variable is defined temporarily. For example, the variable editing interface may further include a variable definition control. After the user inputs an expected name of the target variable, the user may further operate the variable definition control. In response to an operation performed by the user on the variable definition control, a variable definition interface may pop up. The user may further define the target variable by using various controls in the variable definition interface. Based on operations performed by the user, other definition information of the target variable is determined. The other definition information of the target variable may include the type of the target variable, the default value of the target variable, a range for the value of the target variable, a mode, an upper limit, a lower limit, etc. The variable editing interface may further include an expression script control. In an embodiment, similar to the solution for editing the name of the target variable, the expression script control may be an input text box for providing an input interface for the expression, or a selection control for providing a selection interface for the expression. Based on an operation performed by the user on the expression script control, the expression for calculating the value of the target variable is determined. For example, the user directly inputs the expression for calculating the value of the target variable in the input text box.

In an embodiment, an instruction setting interface is displayed before the above variable editing interface is displayed. The instruction setting interface includes an instruction type setting area. As mentioned above, the data processing instructions include various types of instructions, such as the variable assignment instruction. In this step, after the user performs the first operation on the script execution node, the instruction setting interface is displayed first. In an embodiment, the instruction setting interface includes multiple instruction type selection controls, including a first instruction type selection control corresponding to the variable assignment instruction. The variable editing interface described above may be displayed only in response to a selection operation performed by the user on the first instruction type selection control. Then, based on operations performed by the user on the various controls in the variable editing interface, the name of the target variable to be assigned, the expression, etc., are determined.

In an embodiment, the target variable to be assigned may be the number of to-be-pipetted samples. For example, the device corresponding to "device node 2" in FIG. 2 is a liquid workstation. For example, the liquid workstation obtains the number of to-be-pipetted samples from a program before starting pipetting, that is, the number of wells with provided samples in a deep well plate entering the liquid workstation. In an embodiment, the user defines a variable named "pipetting sample count" in the program in advance by using the process editing software, and determines other definition information for the target variable. Through interaction with the process editing interface, a script execution node is added before a device node in the flowchart, where the primary device of the device node is the liquid workstation. For example, "script execution node 2" in FIG. 2 is added. Next, after the user double-clicks "script execution node 2" with the mouse, the instruction setting interface is displayed. The instruction setting interface may include selection controls corresponding one-to-one to various data processing instructions, including a first instruction type selection control corresponding to the variable assignment instruction. After the user double-clicks the first instruction type selection control with the mouse, the variable editing interface is displayed. The variable editing interface may include a name script control. For example, the variable editing interface includes a name editing area and an expression editing area. In the name editing area, a text "name" is displayed, followed by an input text box. The user may input the name of the target variable in the input text box, for example, "pipetting sample count" is inputted. In the expression editing area, a text "expression" is displayed, followed by another input text box. The user may input the expression for calculating the value of "pipetting sample count" in the input text box. For example, "sample count attribute of deep well plate" is inputted. It can be understood that "sample count attribute of deep well plate" is a name of a predefined variable in the system. Through the above human-computer interaction operations, the script information of the variable assignment instruction for the target variable "pipetting sample count" is determined. In this way, during execution of the automated process, before the liquid workstation performs a pipetting operation, the variable assignment instruction may be executed based on the determined script information of the variable assignment instruction, and the number of samples in the deep well plate is obtained and is determined as a value of the target variable "pipetting sample count". In an embodiment, the value of "pipetting sample count" is written into a specific file by means of an "export variable" instruction, to complete data interaction. Thus, the liquid workstation obtains the number of to-be-pipetted samples from this specific file, thereby performing the pipetting operation efficiently and accurately.

In another embodiment, the target variable to be assigned is the number of times a process is performed repeatedly. Similar to the above example, the user may define a target variable named "operation count" in advance through the process editing software, and determine other definition information for the target variable, such as setting a default initial value of the target variable to 0. Then, upon receiving operation information that the user places the mouse cursor over a certain device node (taking "device node 1" in FIG. 2 as an example) in a process and right-clicks, a list control pops up. The list control includes a selection control named "add script execution node before" and a selection control named "add script execution node after". After the user clicks the selection control "add script execution node after" with the mouse, a script execution node may be added after "device node 1" in the flowchart shown in FIG. 2, such as "script execution node 2" in FIG. 2. After the user sequentially double-clicks on "script execution node 2" and selects the first instruction type selection control in the subsequently-displayed instruction setting interface, the variable editing interface is displayed. Similar to the above example, the variable editing interface may include a name editing area and an expression editing area. In the name editing area, the word "name" is displayed, followed by an input text box. The user may input the name of the target variable in the input text box, for example, "operation count" is inputted. In the expression editing area, the text "expression" is displayed, followed by an input text box. The user may input the expression for calculating the value of "operation count" in the input text box. For example, "operation count + 1" is inputted. Through the above human-computer interaction operations, the script information of the variable assignment instruction for the target variable "operation count" is determined. In this way, during the execution of the automated process, each time the loop process is performed once, after the primary operation of the device corresponding to the device node is performed, the variable assignment instruction for the target variable is executed based on the determined script information. That is, the value of the target variable "operation count" is incremented by 1 based on the value assigned to the target variable in the previous loop. After the process ends, a current value of the variable "operation count" can be viewed in a variable monitoring interface, which is the number of times the loop process is performed.

In another embodiment, the target variable to be assigned is the start time instant of the primary operation of a primary device corresponding to a device node. Referring again to FIG. 2, for example, in a case that the primary device corresponding to "device node 1" is a film remover, the start execution time instant of the film remover is determined by using a variable assignment instruction. The transmitting of the operation instruction for the film remover takes time, i.e., there is a communication delay. For example, a time interval from the host computer transmitting the operation instruction to the film remover receiving the instruction is approximately 1 second, where the host computer is for process control, and thus the communication delay is approximately 1 second. Therefore, a variable "communication delay" may be defined in advance by using the method of the above example, and other definition information for this variable is further determined, such as defining that the type of the variable is duration and the variable has a default value of 1 second. In addition, a target variable "film removal start time instant" is defined, with its type set to time instant and its default value set to a current time instant. Based on operation information of an operation performed by the user on the process editing interface, a variable assignment instruction for the target variable "film removal start time instant" may be added to the "pre-operation" of the film remover, and the script information of the variable assignment instruction may be determined. For example, after the user sequentially places the mouse cursor over "device node 1" and right-clicks, and clicks the selection control named "add script execution node before" in the popped-up list control, "script execution node 1" is added in the flowchart. Then, after the user sequentially double-clicks "script execution node 1" and selects the first instruction type selection control in the subsequently-displayed instruction setting interface, the variable editing interface is displayed. Next, the user may input the name "film removal start time instant" of the target variable in the input text box of the name editing area in the variable editing interface. The user may further input the expression "current time instant + communication delay" in the input text box of the expression editing area in the variable editing interface. "current time instant" may be a predefined variable in the system, representing the actual time instant. "communication delay" is a variable predefined by the user. Through the above human-computer interaction operations, the script information of the variable assignment instruction for the target variable "film removal start time instant" can be determined. In this way, during execution of the automated process, before the film remover starts operating, the variable assignment instruction is executed based on the determined script information. In an embodiment, the result of the expression "current time + communication delay" is calculated and assigned to the variable "film removal start time instant". Thus, after the process ends, the user can view the current value of the variable "film removal start time instant" in the variable monitoring interface, which is the start execution time instant of a film removal operation of the film remover.

In another embodiment, the variable to be assigned is an execution duration of a primary operation of a device in the process that requires to be determined. It is taken as an example that the execution duration of the primary device "liquid workstation" corresponding to "device node 2" in FIG. 2 is determined. The user may define multiple variables in advance by using the process editing software. Variables "pipetting start time instant" and "pipetting end time instant" may be defined, and types of the two variables are set to time instant, with default values set to the current time instant. Variables "pipetting execution duration" and "communication delay" may further be defined, and types of the two variables are set to duration, with default values, for example, 0 seconds and 1 second, respectively. Then, the user interacts with the process editing interface, to add two script execution nodes respectively before and after "device node 2" in the flowchart of FIG. 2, for example, adding "script execution node 2" and "script execution node 3" shown in FIG. 2. Then, on the one hand, after the user sequentially double-clicks "script execution node 2" and selects the first instruction type selection control in the subsequently-displayed instruction setting interface, the variable editing interface is displayed. Furthermore, the user may input the name "pipetting start time instant" in the input text box of the name editing area in the variable editing interface, to determine the variable "pipetting start time instant" as the target variable. The user may further input the expression "current time instant + communication delay" in the input text box of the expression editing area in variable editing interface to serve as the expression for calculating the value of the variable "pipetting start time instant". On the other hand, after the user sequentially double-clicks "script execution node 3" and selects the first instruction type selection control in the subsequently-displayed instruction setting interface, the variable editing interface is displayed. Furthermore, the user may input the name "pipetting end time instant" in the input text box of the name editing area in the variable editing interface, to determine the variable "pipetting end time instant" as the target variable. The user may further input the expression "current time instant - communication delay" in the input text box of the expression editing area in the variable editing interface to serve as the expression for calculating the value of the variable "pipetting end time instant". Then, after the user double-clicks "script execution node 3" again and selects the first instruction type selection control in the subsequently-displayed instruction setting interface, the variable editing interface is displayed again. Furthermore, the user may input the name "pipetting execution duration" in the input text box of the name editing area in the variable editing interface, to determine the variable "pipetting execution duration" as the target variable. The user may further input the expression "pipetting end time instant - pipetting start time instant" in the input text box of the expression editing area in the variable editing interface, to serve as the expression for calculating the value of the variable "pipetting execution duration". It can be understood that in this embodiment, three variable assignment instructions required to be added for three target variables at the two script execution nodes before and after the device node. In an embodiment, two variable assignment instructions require to be added at "script execution node 3", one for the target variable "pipetting end time instant" and the other for the target variable "pipetting execution duration". It can be understood that the variable assignment instruction for the target variable "pipetting execution duration" is to be executed after the variable assignment instruction for the target variable "pipetting end time instant". Therefore, the execution order of the two variable assignment instructions may further be set by using the process editing interface. For example, in response to a first operation performed by the user on any script execution node, an instruction order setting interface is displayed. In a case that each script execution node corresponds to multiple instructions, the execution order of the multiple instructions executed at the node may be determined in response to an operation performed on the instruction order setting interface. For example, the instruction order setting interface may include multiple instruction controls arranged in sequence. The multiple instruction controls correspond one-to-one to multiple data processing instructions executed at the node. The name of each instruction control may include the type of the corresponding data processing instruction, a name of the target variable, and the expression. The user may sort the multiple data processing instructions by dragging the multiple instruction controls. For example, the user may drag the instruction control corresponding to the variable assignment instruction for the target variable "pipetting end time instant" to a position before the instruction control corresponding to the variable assignment instruction for the target variable "pipetting execution duration". In this way, during the execution of the automated process, before the liquid workstation starts operating, a result of an assignment expression "current time instant + communication delay" is calculated and assigned to the variable "pipetting start time instant", and after the liquid workstation finishes operating, the result of the assignment expression "current time instant - communication delay" is calculated and assigned to the variable "pipetting end time instant". Then, the result of the expression "pipetting end time instant - pipetting start time instant" is calculated and assigned to the variable "pipetting execution duration". After the process ends, the current value of the variable "pipetting execution duration" can be viewed in the variable monitoring interface, which is the execution duration of the liquid workstation.

In step S170, the script information of the variable assignment instruction is stored.

According to an embodiment of the present disclosure, after the script information of the variable assignment instruction is determined, the script is stored in a preset database by calling an interface based on a preset condition. The preset condition may be any condition indicating that the script of the variable assignment instruction is edited successfully. In an example, the preset condition is receiving a "store instruction script" instruction of the user. In this example, after the script information of the variable assignment instruction is successfully stored, a "storage successful" prompt may be displayed on the interface. In another example, the preset condition is that a verification of the script of the current variable assignment instruction passes. In other words, before storing the script information of the current variable assignment instruction, a verification operation is performed on the script information of the instruction. If the verification passes, the script-storing operation in step S170 is performed. If the verification does not pass, step S170 is not executed.

It can be understood that in the solution of the prior art, to modify values of variables in an automated process during the operation of the process, the values are typically imported from a configuration file or manually inputted by a user via pop-up windows. In this solution, the assignment logic for the variables is hard-coded in the program in advance. The execution timing is constant, and the names of the variables, methods for calculating values of the variables, etc., are all fixedly hard-coded. After the program is compiled, they cannot be modified. When adjustment is required, the codes should be modified by a professional, resulting in poor operability. Moreover, the variable assignment logic in such solution can only assign simple fixed values to variables and cannot support calculation of expressions.

However, according to the method for editing a variable in an automated process in the above-described embodiments of the present disclosure, a process editing interface is provided for a user, and script information of a variable assignment instruction executed at a script execution node is determined and stored through a human-computer interaction operation performed by the user on the interface. Since the script information includes the name of the target variable to be assigned and an expression for calculating the value of the target variable, personalized editing of methods for calculating values of various variables expected to be assigned with values in the process is achieved. Thus, without modifying program codes, the target variable expected to be assigned with a value is flexibly defined through simple operations, and the expression for calculating the value of the target variable is flexibly set. In this way, as long as the script is executed during the automated process, various variables can be assigned with values rapidly and accurately. This solution is applicable to various usage scenarios of automated processes, thereby fully meeting personalized data processing requirements of the user, improving the efficiency in monitoring the automated process, facilitating optimized management of the automated process, and improving the user experience.

In an embodiment, the method 100 further includes step S112 and step S113.

In step S112, in response to a second operation performed by the user on the process editing interface, respective definition information of custom variables in the automated process is determined, where the custom variables include the target variable. In an embodiment, the process editing interface further includes a variable definition area in addition to the flowchart. The variable definition area may include setting controls corresponding to respective definition information of the variables. These setting controls may be any suitable controls, including but not limited to various selection controls, input controls, etc. For example, the variable definition area in the process editing interface is implemented by a variable list. Each row of the variable list corresponds to a variable, and each column of the variable list corresponds to a type of definition information. The definition information includes the name, type, and default value of the variable, and the type of the variable is the digital format of the value of the variable defined by the user. For example, each row of the variable list includes a name input text box, a type selection control, and a default value input text box. In this step, the expected name of the to-be-defined variable inputted by the user using the name input text box, the type of the variable selected by the user using the type selection control, and the default initial value of the variable inputted by the user using the default value input text box may be received. In an embodiment, the name of the variable consists of one or more characters such as numbers, letters, and special symbols. The type of the variable may be numeric, text, date, time instant, duration, etc. The default value of the variable may be any suitable fixed value of the corresponding type. The default value may serve as the initial value of the variable. For example, the user defines variables "pipetting start time instant" and "pipetting end time instant" through the process editing interface, where the user sets the types of the variables to time instant and sets the respective default values of the variables to any time instants. For example, the default value may be set to an actual time instant when defining a variable (e.g., 12:00:00). In some examples, the definition information of a custom variable further includes other information. For example, the definition information may further include a variable numeric identifier corresponding to the variable name and a correspondence between the variable name and the variable numeric identifier. According to an embodiment of the present disclosure, the variable numeric identifier may be automatically generated according to preset rules, may be randomly generated, or may be set by the user using the input apparatus via a text box or an operation control in the variable editing interface. This is not limited in the present disclosure, as long as the numeric identifier for each target variable is unique.

It can be understood that, since the variable type may be freely set through human-computer interaction operations performed by the user on the interface, multiple variable types such as integer, floating point, and Boolean are supported. Thus, multiple types of variable expression are supported. Not only complex calculation methods are supported, but also the final calculation result of the expression may be of various types. For example, time-related variable expressions are supported, where supported operations include: time instant - time instant = duration, date - date = duration, duration + duration = duration, and inverse operations thereof. Furthermore, taking a time-related variable expression as an example, since the type of the variables involved in the time-related expression is modifiable, different types of variables may be flexibly selected for calculation, such that the final calculation result of the expression is of various types. For example, the calculation result of a time-related expression supports three types: date, time, and duration.

In step S113, the definition information of the custom variables is stored. In an embodiment, after the definition information of the custom variables in the automated process is received from the user, the definition information of these variables is stored in a variable database to facilitate obtaining the definition information of these variables during subsequent verification or assignment.

It can be understood that in the solution in the prior art, the method for calculating a to-be-assigned variable, the type of value of the variable, and the default value are all unchangeable. Typically, the solution in the prior art only supports setting one type corresponding to one value. However, in the solution of the above-described embodiments of the present disclosure, the process editing interface provides the user with an interface for the definition information such as the name, type, and default value of a custom variable. In this way, the user can not only customize the name of the variable but also freely set the type and default value of the variable. In other words, the variable assignment instruction may be flexibly edited from multiple dimensions, and different types of variables and different types of expressions may be flexibly selected. Therefore, this solution supports modifiable variable assignment type and supports complex operation methods, to obtain various types of data in the automated process accurately and efficiently, improving the management efficiency of the automated process.

In an embodiment, the determining, based on operation information of a first operation which is performed by a user and is performed on a script execution node in the flowchart, script information of a variable assignment instruction executed at the script execution node in step S140 includes step S141, step S142, and step S143.

In step S141, in response to the first operation performed by the user on the script execution node, a first variable editing interface is displayed, where the first variable editing interface includes an input text box. In step S142, the information on the name of the target variable inputted by the user using the input text box is received. In step S143, the expression for calculating the value of the target variable inputted by the user using the input text box is received.

As mentioned above, the first operation may be any suitable operation performed by the user on the script execution node using any suitable input apparatus, which is not limited in the present disclosure. For example, the first operation may be a single click operation or a double click operation performed by the user on the script execution node with a mouse. After it is detected that the first operation is performed by the user using the input apparatus, the first variable editing interface is directly displayed on a display apparatus such as a screen. The variable editing interface may be a script editing interface provided for the variable assignment instruction of the current target variable. The interface may include a variable name editing area and an expression editing area. In an embodiment, in the variable name editing area, the text "name" is displayed, followed by an input text box. The user may input the name of the target variable to be assigned in the text box using an input apparatus such as a mouse and a keyboard. In an embodiment, in the expression editing area, the text "please enter expression", followed by another input text box, is displayed. The user may place the mouse cursor in the input text box and input the expression for the current target variable using an input apparatus such as a keyboard.

In an embodiment, after the above operations performed by the user are detected, the name and the expression of the target variable inputted by the user are received and stored to serve as the script information of the variable assignment instruction for the target variable.

In another embodiment, the script information of the variable assignment instruction for the target variable is determined based on the name of the target variable inputted by the user and the stored definition information of variables stored in step S113. A numeric identifier of the target variable may be determined based on the name of the target variable and the correspondence between the variable names and the variable numeric identifiers that is stored in step S113, to serve as the information on the name of the target variable. In addition, respective numeric identifiers of the variables included in the expression of the target variable may be determined based on the names of the variables included in the expression of the target variable and the correspondence between variable names and numeric identifiers stored in step S113, and the variable names in the expression may be replaced with the numeric identifiers. In other words, in the determined script information of the variable assignment instruction, the information on the name of the target variable and the names of the variables included in the expression may all be represented by respective unique numeric identifiers. It can be understood that for any variable after defined, the numeric identifier of the variable is unchangeable and unique, and the variable name is allowed to be modified by the user at any time. In the provided solution, variable names in the variable assignment instruction are replaced with numeric identifiers, such that a corresponding variable can still be retrieved via the variable numeric identifier when the script is executed even if the user modifies the variable name after editing the script.

In this solution, after the user operates the script execution node in the flowchart, the variable editing interface is directly displayed. An input interface may be provided to the user via the input text box in the variable editing interface, allowing the user to freely input the name of the target variable and the expression for calculating the value of the target variable, thereby accurately determining the script information of the variable assignment instruction that meets the user requirements.

In an embodiment, the determining, based on operation information of a first operation which is performed by a user and is performed on a script execution node in the flowchart, script information of a variable assignment instruction executed at the script execution node in step S140 includes step S144 and step S145.

In step S144, in response to the first operation performed by the user on the script execution node, a second variable editing interface is displayed, where the second variable editing interface includes an instruction setting control. In step S145, the script information of the variable assignment instruction executed at the script execution node is determined based on operation information of a fourth operation performed by the user on the instruction setting control.

The first operation may be the first operation in step S141 as described above, which is not repeated here. Different from the above step S141, in step S144, the second variable editing interface displayed in response to the first operation performed by the user may be the instruction setting interface in the above example. In an embodiment, the instruction setting interface includes multiple instruction setting controls, including at least an instruction setting control corresponding to the variable assignment instruction. In an example, the second variable editing interface includes an instruction type setting area. The instruction type setting area includes multiple instruction type selection controls. Each instruction type selection control corresponds to one type of data processing instruction, including a first instruction type selection control corresponding to the variable assignment instruction. In an embodiment, in step S145, after the user clicks the first instruction type selection control using an input apparatus such as a mouse, a variable editing interface corresponding to the variable assignment instruction is displayed. That is, an interface providing the user with an input interface and/or an operation interface for setting the name and the expression of the target variable is displayed. The user interacts with the variable editing interface as described in the above examples, to determine the script information of the current variable assignment instruction, including the information on the name of the target variable and the expression for calculating the value of the target variable. Alternatively, in addition to the instruction type setting area described above, the second variable editing interface further includes a variable editing area. In the variable editing area, an input text box and/or operation control is displayed to directly provide the user with an input interface and/or an operation interface for setting the name and expression of the target variable. In this way, after the user sequentially clicks the first instruction type selection control and operates the input text box and/or operation control in the variable editing area using the mouse and a keyboard, the script information of the variable assignment instruction executed at the current script execution node is determined. Furthermore, in some examples, the second variable editing interface further includes an instruction order editing area. The instruction order editing area includes instruction setting controls such as an instruction order editing control. In this way, in a case that multiple data processing instructions are set at the current script execution node, the user can set the order of these data processing instructions by using the instruction order editing control. For example, the current script execution node may include variable assignment instructions for multiple target variables. In this step, the order of these variable assignment instructions may be set through the instruction order editing controls in the second variable editing interface.

In the above solution, after the user operates the script execution node in the flowchart, a variable editing interface including an instruction setting control corresponding to the variable assignment instruction is displayed. After the user operates the instruction setting control, the script information of the variable assignment instruction is determined. In this way, a setting intention of the user is acquired accurately, so as to obtain accurate determined script information of the variable assignment instruction. This human-computer interaction solution is reasonable and is applicable to various scenarios.

In an embodiment, the determining, based on operation information of a fourth operation performed by the user on the instruction setting control, the script information of the variable assignment instruction executed at the script execution node in step S145 includes step S145a, step S145b, and step S145c. In step S145a, in response to the fourth operation performed by the user on the instruction setting control, a third variable editing interface is displayed, where the third variable editing interface includes a variable name selection control and an expression editing control. In step S145b, in response to a fifth operation performed by the user on the variable name selection control, the information on the name of the target variable is determined. In step S145c, in response to a sixth operation performed by the user on the expression editing control, the expression for calculating the value of the target variable is determined.

The function of the third variable editing interface is similar to the function of the first variable editing interface displayed in step S141. Different from the first variable editing interface, the third variable editing interface is further provided with a variable name selection control and an expression editing control. The variable name selection control and the expression editing control may be any suitable operation controls, including but not limited to buttons, radio buttons, check boxes, sliders, etc., as long as they provide an operational interface for selecting variables and editing expressions. In an example, the third variable editing interface includes a variable name selection area and an expression editing area. In an embodiment, in the variable name selection area, the text "name", followed by a variable drop-down list box, is displayed. The variable drop-down list box displays multiple selection controls corresponding to the names of predefined variables. In step S145b, the fifth operation includes the user selecting the name of the target variable expected to be assigned from the variable drop-down list box using the mouse. In an embodiment, in the expression editing area, the text "please select expression", followed by multiple expression editing controls, is displayed. It is taken as an example that an arithmetic expression is set for illustration. For example, the multiple expression editing controls include a variable drop-down list box, an operator drop-down list box, a numeric value drop-down list box, etc. Each drop-down list box displays multiple selection controls. For example, the variable drop-down list box displays multiple selection controls corresponding to the names of the predefined variables, the operator drop-down list box displays multiple selection controls corresponding to various operators, and the numeric value drop-down list box displays multiple selection controls corresponding to various numeric values. In step S145c, the sixth operation at least includes operations performed by the user on these drop-down list boxes and the selection controls in these drop-down list boxes using an input apparatus such as a mouse. In an embodiment, the expression editing area further includes an expression text box. When it is detected that the user places the mouse cursor in the text box, an expression composed of items (a variable name, an operator, a numeric value, etc. selected by the user) selected by the user is displayed in the text box based on the operations performed by the user on the expression editing controls using the mouse. In an embodiment, a "confirm" button is further included after the expression text box. The expression is received in response to the user clicking the "confirm" button with the mouse.

In this solution, after the user operates the instruction setting control corresponding to the variable assignment instruction in the second variable editing interface, a third variable editing interface including a variable name selection control and an expression editing control is displayed. Based on operations performed by the user on these two controls, the information on the name of the target variable and the expression for calculating the value of the target variable are determined. The human-computer interaction solution allows the user intention to add a variable assignment instruction at the current script execution node to be captured, and accurately determines the target variable to be assigned and the expression for calculating the value of the target variable. Importantly, the human-computer interaction solution is reasonable, and greatly reduces the difficulty of the user operation and reduce the time cost for the user setting scripts, thereby improving the human-computer interaction efficiency, reducing input errors and user learning difficulty, and improving the user experience.

In an embodiment, before the storing the script information of the variable assignment instruction in step S170, the method 100 further includes step S160.

In step S160, the script information of the variable assignment instruction is verified to determine whether the script information of the variable assignment instruction is valid. In response to the script information of the variable assignment instruction being determined to be valid, the script information of the variable assignment instruction is stored.

In this step, any suitable verification logic for the script information may be employed to verify the determined script information of the variable assignment instruction. In an embodiment, it is determined whether the script information of the variable assignment instruction is valid by verifying whether the target variable exists based on the name of the target variable. In another embodiment, a syntax of the script of the expression for calculating the value of the target variable is verified, and then it is determined whether the script information of the variable assignment instruction is valid based on the syntax verification result. In another embodiment, the calculated result of the expression is obtained by using a suitable method, and it is determined whether the script information of the variable assignment instruction is valid based on the type of the calculated result.

The above solution ensures the validity of the stored script information of the variable assignment instruction, preventing unnecessary memory occupation, thereby improving the effectiveness of data acquisition in the automated process.

In an embodiment, the information on the name of the target variable to be assigned is a numeric identifier corresponding to the name of the target variable, and the definition information further includes the numeric identifier corresponding to the name of the variable and a correspondence between the name and the numeric identifier.

As mentioned above, the user operates text boxes and/or operation controls in the process editing interface and the variable editing interface by using the input apparatus, to add a variable assignment instruction for the target variable at the script execution node in the process and set the name and the expression of the target variable. Original script information of the variable assignment instruction set by the user is prestored in the database. In an embodiment, in the prestored script information of each variable assignment instruction, the information on the name of the target variable may be a unique numeric identifier of the variable. In other words, the unique numeric identifier serving as the name of the target variable may be prestored. For each variable assignment instruction, the prestored numeric identifier of the target variable may be automatically generated according to preset rules, may be randomly generated, or may be set by the user using the input apparatus in the variable editing interface. This is not limited in the present disclosure, as long as ensuring that respective target variables correspond to different numeric identifiers. It can be understood that the correspondence between a variable name and a variable numeric identifier may be a one-to-one correspondence or a one-to-many correspondence. For two variable assignment instructions executed at two different script execution nodes, the names of the target variables involved in the respective variable assignment instructions may be the same, but the numeric identifiers are different. In other words, the name of each variable may not be unique, but the numeric identifier is unique.

Before the verifying the script information of the variable assignment instruction in step S160, the method 100 further includes: step S150. In step S150, preprocessing is performed on the script information of the variable assignment instruction based on the correspondence, to replace the numeric identifier of the target variable and a numeric identifier of the associated variable of the target variable included in the variable assignment instruction with respective names of the target variable and the associated variable.

As mentioned above, in the determined script information of the variable assignment instruction in step S140, the information on the name of the target variable and respective names of the variables involved in the expression may be represented by unique numeric identifiers. To ensure smooth and efficient execution of the verifying the script information of the variable assignment instruction, the numeric identifier of the target variable in the script information of the variable assignment instruction and a numeric identifier of the associated variable of the target variable involved in the variable assignment instruction may be replaced with respective names of the variables in this step based on the correspondence between the names and the numeric identifiers of the variables determined in step S113.

The associated variable of the target variable may be all variable involved in the variable assignment instruction. For example, in the above embodiments, the variable assignment instruction for the target variable "pipetting execution duration" is added at "script execution node 3" after the device node corresponding to the liquid workstation, and the expression for the target variable "pipetting execution duration" is "pipetting end time instant - pipetting start time instant". For this example, the associated variables of the target variable "pipetting execution duration" are the variable "pipetting end time instant" and the variable "pipetting start time instant". Therefore, in step S150, the numeric identifier of the target variable "pipetting execution duration" involved in the variable assignment instruction may be replaced with the name "pipetting execution duration", the numeric identifier of the variable "pipetting end time instant" involved in the expression may be replaced with the name "pipetting end time instant", and the numeric identifier of the variable "pipetting start time instant" involved in the expression may be replaced with the name "pipetting start time instant".

As mentioned above, the prestored script information of the variable assignment instruction stores the unique numeric identifier of the variable to serve as the information on the name of the variable, rather than directly storing the name of the variable, which is applicable to a case where the user modifies the name of the variable after writing the script, causing the name in the script to differ from the name of the variable. This solution allows the user to modify the name in the variable definition after writing the script. Since the name of the variable is stored in a form of the unique numeric identifier of the variable in the prestored original script information of the variable assignment instruction, preprocessing is performed on the variable assignment script transmitted from a front end during script verification, i.e., the unique numeric identifiers of the variables in the script are replaced with their corresponding variable names, and then the script information is verified.

The verifying the script information of the variable assignment instruction in step S160 includes step S160a. In step S160a, the script information of the variable assignment instruction is verified by using the names that replace the numeric identifiers. In an embodiment, based on the names of the variables that replace the numeric identifiers in the script information of the variable assignment instruction, the definition information of the target variable and the expression for calculating the value of the target variable are obtained, and the definition information of the associated variable of the target variable is further obtained.

The solution facilitates verifying the script information of the variable assignment instruction based on the above information, improving the efficiency and the accuracy for verifying the script information.

In an embodiment, in step S170, the script information of the variable assignment instruction is stored in a case that the verification on the script information of the variable assignment instruction passes, i.e., in response to the script information of the variable assignment instruction being determined to be valid. In the stored script information, the information on the name of the target variable may be the unique numeric identifier of the variable, that is, the unique numeric identifier serving as the name of the target variable may be prestored. It can be understood that when storing the script information of the variable assignment instruction, using the numeric identifier to represent the name of the variable not only enables the user to modify the name in the variable definition after the script is written, facilitating determining the corresponding variable based on the stored unique numeric identifier during subsequent script execution, but also reduces memory usage and improves the execution efficiency of the script, thereby enabling rapid and accurate assignment of a value to the target variable during the automated process.

In an embodiment, the verifying the script information of the variable assignment instruction in step S160 includes step S161, step S162, and step S163.

In step S161, a syntax of the expression in the script information is verified to determine whether the syntax of the expression in the script information is valid.

In an embodiment, the variable editing interface includes a "confirm" button. After editing the name and the value using the text boxes and/or the operation controls in the variable editing interface, the user may click the "confirm" button. Upon receiving operation information that the user clicks the "confirm" button, a script verification interface is called to perform syntax verification on the script information of the variable assignment instruction. Any suitable syntax verification method may be employed to implement this step. For example, a syntax parsing tool such as GOLD Parser is used for syntax verification. In an embodiment, it is verified whether the variables are defined, and it is determined whether the statement logic is correct, whether various exceptions are considered, whether errors cause an exit, whether a correct status value is returned and the like.

In an example, after the syntax verification, the result information returned by the verification interface includes a result indicating whether the syntax verification of the script passes, the position and the exception information of the syntax error when the verification does not pass, etc. In an embodiment, when the verification does not pass, error information is displayed on the variable editing interface to prompt the user to make corresponding modifications.

In step S162, a result of the expression is calculated, and the result of the expression is verified, to determine whether the expression is valid. Various suitable methods may be employed to calculate the result of the expression. For example, the result of the expression is calculated based on respective definition information of the variables involved in the expression. For example, respective default values of the variables involved in the expression are substituted into the expression to obtain a calculated result of the expression. Then, based on the calculated result, it is determined whether the expression is valid. For example, it is determined whether the type of the calculated result is consistent with the type of the target variable in the definition information of the target variable to determine whether the expression is valid.

In step S163, in response to both the syntax of the expression in the script information and the expression being determined to be valid, it is determined that the script information of the variable assignment instruction is valid.

In the above solution, the validity of the syntax of the script information of the variable assignment instruction is verified, and the validity of the expression is verified by calculating the result of the expression. Only when the syntax of the script information is valid and the expression is valid, the script information of the variable assignment instruction is determined to be valid, so as to store the valid script information of the variable assignment instruction. The solution for verifying the script information ensures the stored script information of the variable assignment instruction with valid syntax and valid expression, which facilitates smooth and accurate execution of the script during the automated process. In this way, the variables are assigned with values accurately, and the automated process is controlled accurately, improving the management efficiency.

In an embodiment, the calculating the result of the expression and verifying the result of the expression in step S162 is performed in response to the syntax of the script information of the expression being determined to be valid in step S161. In other words, in this solution, step S161 is executed prior to step S162. When the syntax verification result of the script information in step S161 indicates the syntax is valid, step S162 is executed, and then it is determined whether the script information of the variable assignment instruction is valid based on the verification result of the expression in step S162. When the syntax verification result of the script information in step S161 indicates the syntax is invalid, it is directly determined that the script information of the variable assignment instruction is invalid, and step S162 is not executed.

The execution logic of the above solution is reasonable, reducing unnecessary calculations, thereby improving the efficiency of verifying the script information of the variable assignment instruction while ensuring accurate verification of the script information of the variable assignment instruction.

In an embodiment, the calculating a result of the expression and verifying the result of the expression in step S162 includes step S162a and step S162b. In step S162a, the result of the expression is calculated based on a default value of an associated variable of the target variable included in the script information, where the associated variable of the target variable is involved in the expression of the target variable. In step S162b, it is determined whether a type of the calculated result of the expression is consistent with a type of the target variable, and in a case that the type of the calculated result of the expression is consistent with the type of the target variable, it is determined that the expression is valid.

In an embodiment, step S162a is executed in response to the syntax of the script information of the variable assignment instruction being determined to be valid. In an embodiment, the result of the expression is calculated based on respective default values in the definition information of variables in the expression. It can be understood that the default value of a variable is fixedly hard-coded. For example, for the variable assignment instruction of the target variable "film removal start time instant", the expression is "current time instant + communication delay". Taking it as an example that the default value of the variable "current time instant " defined by the user is 10:00:00 (time format: hour: minute: second), that is, the system time when the variable is defined is 10:00:00, and the default value of the variable "communication delay" defined by the user is, for example, 1s, then in step S162a, the result of the expression is calculated based on the default values of these two variables, to obtain the calculated result of 10:00:01.

In step S162b, the type of the calculated result of the expression is compared with the type of the target variable in the definition information. If the two types are consistent, it is determined that the expression of the variable assignment instruction is valid. If the two types are inconsistent, it is determined that the expression of the variable assignment instruction is invalid. In a case that the verification result indicates the expression is invalid, a special mark is written into the "type" of the expression in the calculation result, and verification exception information of the expression is recorded to serve as an expression verification result. Then, the expression verification result including such as a calculation success/failure flag, the expression calculation result, and expression calculation exception information, is formed. The information related to the expression verification result may be displayed on the process editing interface for the user to view.

In an embodiment, in step S162a, if the result of the expression fails to be calculated, it is directly determined that the verification of the expression does not pass, prompt information indicating that the expression is invalid is displayed in the variable editing interface, and the editing process ends. If the result of the expression is calculated, step S162b is executed to determine whether the type of the current target variable is consistent with the type of the calculated result of the expression. If the types are consistent, it is determined that the script information of the variable assignment instruction is valid, allowing the storage of the script information of the variable assignment instruction. If the types are inconsistent, prompt information indicating a type mismatch is displayed in the variable editing interface, and the editing process ends.

The above method for verifying the result of the expression in the script information of the variable assignment instruction is relatively simple, with low computational load and high verification accuracy.

In an embodiment, the storing the script information of the variable assignment instruction in step S170 includes step S171. In step S171, the script information of the variable assignment instruction is assembled, and the assembled script information of the variable assignment instruction is stored. In the assembled script information of the variable assignment instruction, the names of variables are represented by numeric identifiers. In an embodiment, in response to the script information of the variable assignment instruction being determined to be valid, an interface is called to store the instruction and the script of the expression to the database. In an embodiment, in the assembled script information of the variable assignment instruction, the names of variables are represented by numeric identifiers.

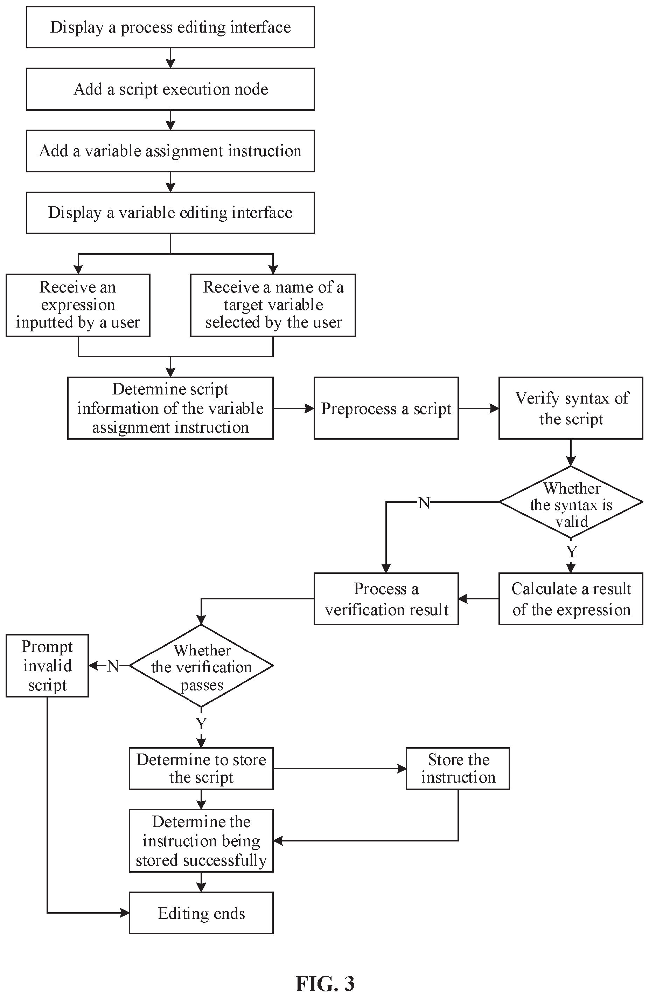

FIG. 3 shows a flowchart of a method for editing a variable in an automated process according to another embodiment of the present disclosure. In an embodiment, a human-computer interaction device including a primary controller, an input apparatus connected to the primary controller, and a display apparatus is provided to facilitate user editing of the automated process. The primary controller is a host computer, and an editing software for the automated process is installed in an operating system of the host computer in advance. In an embodiment, in response to an input operation performed by the user using the input apparatus, a process editing interface is displayed by using the display apparatus. The process editing interface includes a flowchart. The flowchart includes a device node and a script execution node, and the script execution node is arranged before or after any device node. In an embodiment, the process editing interface includes a node addition control, and the script execution node is added by the user using the node addition control. For example, if the user expects to add a variable assignment instruction in a pre-operation corresponding to a device node, the user may add a script execution node before the device node by operating the node addition control. In an embodiment, the process editing interface further includes a variable definition area. The variable definition area includes setting controls for respective definition information of a variable. The user may define variables including the target variable and associated variables of the target variable using the setting controls. According to an embodiment of the present disclosure, based on the operation information of an operation performed by the user on the setting controls in the process editing interface, the definition information of the respective variables is determined. In an embodiment, the definition information includes the names, default values, and types of the variables, etc. The definition information may further include unique numeric identifiers of the variables and a correspondence between the numeric identifiers and the names.

After the user clicks the script execution node with the mouse, an instruction setting interface is displayed. The instruction setting interface includes an instruction type setting area. The instruction type setting area includes multiple instruction type selection controls including a first instruction type selection control corresponding to a variable assignment instruction. In response to a selection operation performed by the user on the first instruction type selection control, a variable editing interface is displayed. The variable editing interface includes a name editing area and an expression editing area. Both the name editing area and the expression editing area include an input text box and/or various suitable operation controls. Based on operation information of an operation performed by the user on the input text box and/or operation control, the script information of the variable assignment instruction executed at the script execution node is determined. In an embodiment, based on the operation information of the operation performed by the user on the text box and/or operation control in the name editing area, the information on the name of the target variable is determined, and based on the operation information of the operation performed by the user on the text box and/or operation control in the expression editing area, the expression for calculating the value of the target variable is determined. For example, the name of the target variable selected by the user using the selection control in the name editing area is received, and the expression inputted by the user using the input text box in the expression editing area is received. Based on the received name and expression, the script information of the variable assignment instruction is determined. In an embodiment, in the determined script information of the variable assignment instruction, the name of the target variable and the names of the variables involved in the expression may be represented by unique numeric identifiers corresponding to the respective names. In an embodiment, the variable editing interface further includes a "confirm" button. In response to the user clicking the "confirm" button, preprocessing is performed on the determined script information of the variable assignment instruction. In an embodiment, the numeric identifiers of the variables in the script information are replaced with the variable names. Then, a syntax of the script information of the variable assignment instruction is verified by using a script verification interface to determine whether the syntax of the script information is valid. If it is determined that the syntax of the script information is invalid, it is directly determined that the verification of the script information of the variable assignment instruction does not pass. If it is determined that the syntax of the script information is valid, the result of the expression is calculated based on the default values of the variables in the expression, to obtain a calculated result of the expression. It is determined whether the type of the calculated result is consistent with the type of the target variable which is set in the definition information. If the types are consistent, it is determined that the verification of the script information of the variable assignment instruction passes. In response to the verification passing, the script information of the variable assignment instruction is stored in the preset database, and the editing interface is exited. In response to the verification not passing, prompt information indicating that the script information is invalid is outputted on the variable editing interface to prompt the user to check and modify.

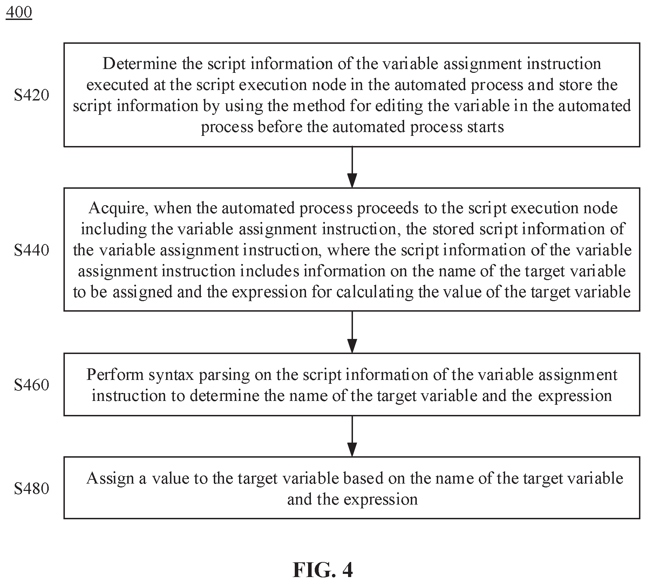

According to a second aspect of the present disclosure, a method for controlling an automated process is further provided. FIG. 4 shows a flowchart of a method 400 for controlling an automated process according to an embodiment of the present disclosure. As shown in FIG. 4, the method 400 includes steps S420 to S480.

In step S420, before the automated process starts, the script information of the variable assignment instruction executed at the script execution node in the automated process is determined and stored by using the method 100 for editing the variable in the automated process as described above.

In step S440, the stored script information of the variable assignment instruction is acquired when the automated process proceeds to the script execution node including the variable assignment instruction. The script information of the variable assignment instruction includes information on a name of a target variable to be assigned and an expression for calculating a value of the target variable. In an embodiment, when the process proceeds to the script execution node, it is determined whether the node includes the script of the variable assignment instruction. If the node includes the script of the variable assignment instruction, the script information of the variable assignment instruction is acquired.

In step S460, syntax parsing is performed on the script information of the variable assignment instruction to determine the name of the target variable and the expression. The syntax parsing performed on the syntax of the script information of the variable assignment instruction may be implemented by using any suitable syntax parsing approach. After the syntax parsing is completed, the name of the target variable and the expression are obtained.

In an embodiment, before the syntax parsing, preprocessing is performed on the script information. As mentioned above, the variable names in the stored variable assignment instruction are represented by unique numeric identifiers of the variables. Therefore, the script information of the variable assignment instruction acquired from the database cannot be used directly and requires preprocessing. In an embodiment, the variable numeric identifiers in the script information are replaced with variable names. The implementation of this step is similar to the solution of step S150 described above, which is not repeated here.

In step S480, a value is assigned to the target variable based on the name of the target variable and the expression.

In an embodiment, an actual result of the expression is calculated based on the expression and current values of the variables involved in the expression. For example, for the variable assignment instruction of the target variable "film removal start time instant", the expression is "current time instant + communication delay". In this step, the current value of "current time instant", i.e., the current system time instant, is used. For example, the current value of the current time instant is 13:00:00, and the current value of the variable "communication delay" is 1s. The current values of these two variables are substituted into the expression to obtain the actual result of the expression "current time instant + communication delay" of 13:00:01.

In an embodiment, a value is assigned to the target variable based on a preset condition. By way of example and not limitation, the preset condition may be the type of the target variable being consistent with the type of the calculated actual result of the expression. In an embodiment, after the script information is acquired, the definition information of all variables defined in the process are obtained, and the information is assembled into execution parameter information. The type of the target variable corresponding to the current variable assignment instruction is determined from the combined execution parameter information. It is determined whether the defined type of the target variable is consistent with the type of the calculated actual result of the expression. If they are consistent, the calculated actual value is assigned to the target variable, and the execution of the variable assignment instruction ends.

On one hand, the method for controlling an automated process provides an intuitive process editing interface allowing users to freely edit the variable assignment script in the automated process, achieving personalized editing of the names of various variables expected to be assigned and methods for calculating values of the variables in the process. Thus, without modifying program codes, the target variable expected to be assigned is flexibly defined through simple operations, and the expression for calculating the value of the target variable is flexibly set. On the other hand, when the automated process proceeds to a script execution node including a variable assignment instruction, the name and expression of the target variable is obtained accurately only by acquiring the script information of the variable assignment instruction and performing syntax parsing on the script information. Then a value is assigned to the target variable based on the name and expression of the target variable. In this method, by editing and executing scripts to implement assignment, the assignment timing and the implementation of the assignment method are set flexibly, with simple execution logic, low computational load, and high assignment efficiency and accuracy. Moreover, this solution is applicable to various usage scenarios of automated processes, to fully meet personalized data processing requirements of the users, thereby improving the efficiency in monitoring the automated processes, facilitating optimized management of automated processes, and improving the user experience.

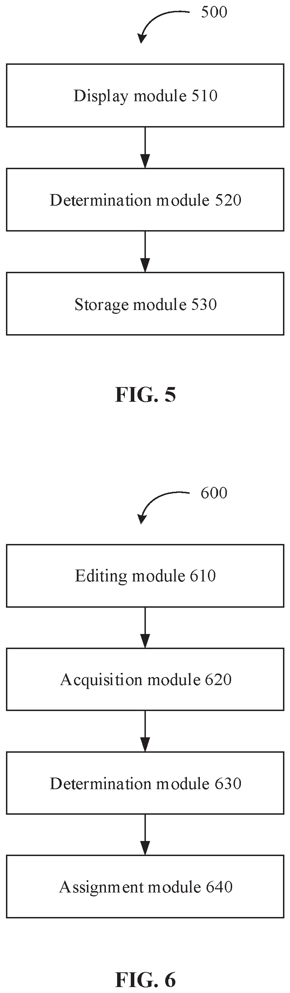

According to a third aspect of the present disclosure, a system for editing a variable in an automated process is further provided. FIG. 5 shows a schematic block diagram of a system 500 for editing a variable in an automated process according to an embodiment of the present disclosure. As shown in FIG. 5, the system 500 includes: a display module 510, a determination module 520, and a storage module 530.

The display module 510 is configured to display a process editing interface, where the process editing interface includes a flowchart of the automated process.

The determination module 520 is configured to determine, based on operation information of a first operation which is performed by a user and is performed on a script execution node in the flowchart, script information of a variable assignment instruction executed at the script execution node, where the script information of the variable assignment instruction includes information on a name of a target variable to be assigned and an expression for calculating a value of the target variable.

The storage module 530 is configured to store the script information of the variable assignment instruction.

According to a fourth aspect of the present disclosure, a system for controlling an automated process is further provided. FIG. 6 shows schematic block diagram of a system 600 for controlling an automated process according to an embodiment of the present disclosure. As shown in FIG. 6, the system 600 includes: an editing module 610, an acquisition module 620, a determination module 630, and an assignment module 640.

The editing module 610 is configured to, by using the method for editing the variable in the automated process as described above, determine the script information of the variable assignment instruction executed at the script execution node in the automated process and store the script information before the automated process starts.

The acquisition module 620 is configured to acquire, during the automated process, the stored script information of the variable assignment instruction when the automated process proceeds to the script execution node including the variable assignment instruction, where the script information of the variable assignment instruction includes information on the name of the target variable to be assigned and the expression for calculating the value of the target variable.

The determination module 630 is configured to perform syntax parsing on the script information of the variable assignment instruction to determine the name of the target variable and the expression.

The assignment module 640 is configured to assign a value to the target variable based on the name of the target variable and the expression.

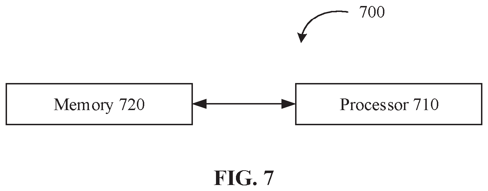

According to a fifth aspect of the present disclosure, an electronic device is further provided. FIG. 7 shows a schematic block diagram of an electronic device 700 according to an embodiment of the present disclosure. As shown in FIG. 7, the electronic device 700 includes a processor 710 and a memory 720. The memory 720 stores computer program instructions. The computer program instructions, when executed by the processor 710, are configured to perform the method for editing the variable in the automated process and/or the method for controlling the automated process as described above.

According to a sixth aspect of the present disclosure, a storage medium is further provided. Program instructions are stored on the storage medium. The program instructions, when executed, are configured to perform the method for editing the variable in the automated process and/or the method for controlling the automated process as described above.

Those skilled in the art can understand the specific implementation and beneficial effects of the above-described system 500 for editing the variable in the automated process, the system 600 for controlling the automated process, the electronic device 700, and the storage medium by reading the relevant description of the method 100 for editing the variable in the automated process and the method 400 for controlling the automated process. For brevity, they are not repeated here.

### Embodiments

Embodiment 1. A method for editing a variable in an automated process is provided, and the method comprises:
displaying a process editing interface, where the process editing interface comprises a flowchart of the automated process;
determining, based on operation information of a first operation which is performed by a user and is performed on a script execution node in the flowchart, script information of a variable assignment instruction executed at the script execution node, where the script information of the variable assignment instruction comprises information on a name of a target variable to be assigned and an expression for calculating a value of the target variable; and
storing the script information of the variable assignment instruction.

Embodiment 2. The method described in embodiment 1 is provided, where before the storing the script information of the variable assignment instruction, the method further comprises:
verifying the script information of the variable assignment instruction to determine whether the script information of the variable assignment instruction is valid,
where in response to the script information of the variable assignment instruction being determined to be valid, the script information of the variable assignment instruction is stored.

Embodiment 3. The method described in embodiment 1 or 2 is provided, where the verifying the script information of the variable assignment instruction comprises:
verifying a syntax of the expression in the script information to determine whether the syntax of the expression in the script information is valid;
calculating a result of the expression and verifying the result of the expression to determine whether the expression is valid ; and
determining, in response to both the syntax of the expression in the script information and the expression being determined to be valid, that the script information of the variable assignment instruction is valid.

Embodiment 4. The method described in any one of embodiments 1 to 3 is provided, where in response to the syntax of the expression in the script information being determined to be valid, the result of the expression is calculated and verified.

Embodiment 5. The method described in any one of embodiments 1 to 4 is provided, where the calculating a result of the expression and verifying the result of the expression comprises:
calculating the result of the expression based on a default value of an associated variable of the target variable comprised in the script information , where the associated variable of the target variable is involved in the expression of the target variable; and
determining whether a type of the calculated result of the expression is consistent with a type of the target variable, and determining, in response to the type of the calculated result of the expression being consistent with the type of the target variable, that the expression is valid.

Embodiment 6. The method described in any one of embodiments 1 to 5 is provided, and the method further comprises:
determining, in response to a second operation performed by the user on the process editing interface, respective definition information of custom variables in the automated process, where the custom variables comprise the target variable; and
storing the definition information of the custom variables,
where the definition information comprises a name, a type, and a default value of each custom variable of the custom variables, and the type of the custom variable is a digital format of a value of the custom variable defined by the user.

Embodiment 7. The method described in any one of embodiments 1 to 6 is provided, where the information on the name of the target variable to be assigned is a numeric identifier corresponding to the name of the target variable, and the definition information further comprises the numeric identifier corresponding to the name of the custom variable and a correspondence between the name and the numeric identifier,
before the verifying the script information of the variable assignment instruction, the method further comprises:
preprocessing the script information of the variable assignment instruction based on the correspondence, to replace the numeric identifier of the target variable and a numeric identifier of the associated variable of the target variable comprised in the variable assignment instruction with respective names of the target variable and the associated variable, and
the verifying the script information of the variable assignment instruction comprises:
verifying the script information of the variable assignment instruction by using the names that replace the numeric identifiers.

Embodiment 8. The method described in any one of embodiments 1 to 7 is provided, and the method further comprises:
adding, in response to a third operation performed by the user on the flowchart, the script execution node to the automated process.

Embodiment 9. The method described in any one of embodiments 1 to 8 is provided, where the determining, based on the operation information of the first operation which is performed by the user and is performed on the script execution node in the flowchart, the script information of the variable assignment instruction executed at the script execution node comprises:
displaying, in response to the first operation performed by the user on the script execution node, a first variable editing interface, where the first variable editing interface comprises an input text box;
receiving the information on the name of the target variable inputted by the user using the input text box; and
receiving the expression for calculating the value of the target variable inputted by the user using the input text box.

Embodiment 10. The method described in any one of embodiments 1 to 9 is provided, where the determining, based on the operation information of the first operation which is performed by the user and is performed on the script execution node in the flowchart, the script information of the variable assignment instruction executed at the script execution node comprises:
displaying, in response to the first operation performed by the user on the script execution node, a second variable editing interface, where the second variable editing interface comprises an instruction setting control corresponding to the variable assignment instruction; and
determining, based on operation information of a fourth operation performed by the user on the instruction setting control, the script information of the variable assignment instruction executed at the script execution node.

Embodiment 11. The method described in any one of embodiments 1 to 10 is provided, where the determining, based on the operation information of the fourth operation performed by the user on the instruction setting control, the script information of the variable assignment instruction executed at the script execution node comprises:
displaying, in response to the fourth operation performed by the user on the instruction setting control, a third variable editing interface, where the third variable editing interface comprises a variable name selection control and an expression editing control;
determining, in response to a fifth operation performed by the user on the variable name selection control, the information on the name of the target variable; and
determining, in response to a sixth operation performed by the user on the expression editing control, the expression for calculating the value of the target variable.

Embodiment 12. The method described in any one of embodiments 1 to 11 is provided, where the script execution node comprises at least one of: a first script execution node arranged before any device node of device nodes in the automated process, or a second script execution node arranged after the device node, and
the variable assignment instruction executed at the first script execution node is executed before a primary operation of the device node is performed, and the variable assignment instruction executed at the second script execution node is executed after the primary operation of the device node is performed.

Embodiment 13. A method for controlling an automated process is provided, and the method comprises:
determining the script information of the variable assignment instruction executed at the script execution node in the automated process and storing the script information by using the method for editing the variable in the automated process described in any one of embodiments 1 to 12 before the automated process starts;
acquiring, when the automated process proceeds to the script execution node comprising the variable assignment instruction, the stored script information of the variable assignment instruction, where the script information of the variable assignment instruction comprises information on the name of the target variable to be assigned and the expression for calculating the value of the target variable;
performing syntax parsing on the script information of the variable assignment instruction to determine the name of the target variable and the expression; and
assigning a value to the target variable based on the name of the target variable and the expression.

Embodiment 14. A system for editing a variable in an automated process is provided, and the system comprises:
a display module, configured to display a process editing interface, where the process editing interface comprises a flowchart of the automated process;
a determination module, configured to determine, based on operation information of a first operation which is performed by a user and is performed on a script execution node in the flowchart, script information of a variable assignment instruction executed at the script execution node, where the script information of the variable assignment instruction comprises information on a name of a target variable to be assigned and an expression for calculating a value of the target variable; and
a storage module, configured to store the script information of the variable assignment instruction.

Embodiment 15. A system for controlling an automated process is provided, and the system comprises:
an editing module, configured to determine the script information of the variable assignment instruction executed at the script execution node in the automated process and storing the script information by using the method for editing the variable in the automated process described in any one embodiments 1 to 12 before the automated process starts;
an acquisition module, configured to acquire, when the automated process proceeds to the script execution node comprising the variable assignment instruction, the stored script information of the variable assignment instruction, where the script information of the variable assignment instruction comprises information on the name of the target variable to be assigned and the expression for calculating the value of the target variable;
a determination module, configured to perform syntax parsing on the script information of the variable assignment instruction to determine the name of the target variable and the expression; and
an assignment module, configured to assign a value to the target variable based on the name of the target variable and the expression.

Embodiment 16. An electronic device, comprising a processor and a memory, is provided. The memory stores computer program instructions, and the computer program instructions, when executed by the processor, perform the method for editing the variable in the automated process described in any one embodiments 1 to 12 and/or the method for controlling the automated process described in embodiment 13.

Embodiment 17. A storage medium, storing program instructions, is provided. The program instructions, when executed, perform the method for editing the variable in the automated process described in any one embodiments 1 to 12 and/or the method for controlling the automated process described in embodiment 13.

Although the embodiments have been described herein with reference to the drawings, it should be understood that the above embodiments are merely exemplary and are not intended to limit the scope of the present disclosure. Various changes and modifications may be made by those skilled in the art without departing from the scope and spirit of the present disclosure. All such changes and modifications are deemed to fall into the scope claimed by the claims of the present disclosure.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Those skilled in the art may use different methods to implement the described functions for each specific application, but such implementation should not be regarded as exceeding the scope of the present disclosure.

It should be understood that the devices and methods disclosed in the embodiments of the present disclosure may be implemented in other manners. For example, the device embodiments described hereinabove are only schematic. For example, the division of the units is only based on logical functions, and there may be other division manners in practical implementation, such as multiple units or components may be combined or integrated into another device, or some features may be neglected or not executed.

In the specification provided herein, a lot of specific details are explained. However, it can be understood that the embodiments of the present disclosure may be practiced without these specific details. In some embodiments, well-known methods, structures and techniques are not shown in detail in order to avoid obscuring understanding of the specification.

Similarly, it should be understood that in order to simplify the present disclosure and facilitate understanding one or more of the various aspects of the disclosure, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed disclosure requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, where each claim itself serves as an independent embodiment of the present disclosure.

It can be understood by those skilled in the art that, except for mutually exclusive features, all features disclosed in this specification (including the claims, abstract and drawings) and all processes or units of any method or device disclosed in the specification may be combined in any way. Unless otherwise expressly stated, each feature disclosed in this specification (including the claims, abstract and drawings) may be replaced by an alternative feature that provides the same, equivalent or similar purpose.

In addition, it can be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments may be used in any combination.

The various component embodiments of the present disclosure may be implemented in hardware, or in software modules running on one or more processors, or in a combination thereof. It can be understood by those skilled in the art that a microprocessor or a digital signal processor (DSP) may be adopted in practice to realize some or all of the functions of some of the modules of the system for editing the variable in the automated process and the system for controlling the automated process according to the embodiments of the present disclosure. The present disclosure may alternatively be implemented as a device program (such as a computer program and computer program product) for performing part or all of the methods described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising/including" does not exclude the presence of elements or steps not listed in the claims. The word "a" or "an" preceding an element does not exclude the presence of multiple of such elements. The present disclosure may be implemented by means of hardware including several different elements and by means of a suitably programmed computer. In a unit claim enumerating several apparatuses, several of these apparatuses may be embodied by a same hardware item. The use of the words "first", "second", "third" and the like does not indicate any order. These words may be interpreted as names.

Described above are only specific embodiments of the present disclosure or explanation for the specific embodiments of the present disclosure, and the protection scope of the present disclosure is not limited thereto. Any changes or alternations that can be easily envisaged by those familiar with the art within the technical scope disclosed in the present disclosure shall fall within the protection scope of the present disclosure. The protection scope of the present disclosure shall be in accordance with the protection scope of the claims.

## Claims

1. A method for editing a variable in an automated process, **characterized by** comprising:
displaying a process editing interface, wherein the process editing interface comprises a flowchart of the automated process;
determining, based on operation information of a first operation which is performed by a user and is performed on a script execution node in the flowchart, script information of a variable assignment instruction executed at the script execution node, wherein the script information of the variable assignment instruction comprises information on a name of a target variable to be assigned and an expression for calculating a value of the target variable; and
storing the script information of the variable assignment instruction.

2. The method according to claim 1, **characterized in that** before the storing the script information of the variable assignment instruction, the method further comprises:
verifying the script information of the variable assignment instruction to determine whether the script information of the variable assignment instruction is valid,
wherein in response to the script information of the variable assignment instruction being determined to be valid, the script information of the variable assignment instruction is stored.

3. The method according to claim 2, **characterized in that** the verifying the script information of the variable assignment instruction comprises:
verifying a syntax of the expression in the script information to determine whether the syntax of the expression in the script information is valid;
calculating a result of the expression and verifying the result of the expression to determine whether the expression is valid; and
determining, in response to both the syntax of the expression in the script information and the expression being determined to be valid, that the script information of the variable assignment instruction is valid.

4. The method according to claim 3, **characterized in that** in response to the syntax of the expression in the script information being determined to be valid, the result of the expression is calculated and verified.

5. The method according to claim 3, **characterized in that** the calculating a result of the expression and verifying the result of the expression comprises:
calculating the result of the expression based on a default value of an associated variable of the target variable comprised in the script information, wherein the associated variable of the target variable is involved in the expression of the target variable; and
determining whether a type of the calculated result of the expression is consistent with a type of the target variable, and determining, in response to the type of the calculated result of the expression being consistent with the type of the target variable, that the expression is valid.

6. The method according to any one of claims 1 to 5, **characterized by** further comprising:
determining, in response to a second operation performed by the user on the process editing interface, respective definition information of custom variables in the automated process, wherein the custom variables comprise the target variable; and
storing the definition information of the custom variables, wherein the definition information comprises a name, a type, and a default value of each custom variable of the custom variables, and the type of the custom variable is a digital format of a value of the custom variable defined by the user.

7. The method according to claim 6 dependent on claim 2, **characterized in that** the information on the name of the target variable to be assigned is a numeric identifier corresponding to the name of the target variable, and the definition information further comprises the numeric identifier corresponding to the name of the custom variable and a correspondence between the name and the numeric identifier,
before the verifying the script information of the variable assignment instruction, the method further comprises:
preprocessing the script information of the variable assignment instruction based on the correspondence, to replace the numeric identifier of the target variable and a numeric identifier of the associated variable of the target variable comprised in the variable assignment instruction with respective names of the target variable and the associated variable, and
the verifying the script information of the variable assignment instruction comprises:
verifying the script information of the variable assignment instruction by using the names that replace the numeric identifiers.

8. The method according to any one of claims 1 to 5, **characterized by** further comprising:
adding, in response to a third operation performed by the user on the flowchart, the script execution node to the automated process.

9. The method according to any one of claims 1 to 5, **characterized in that** the determining, based on the operation information of the first operation which is performed by the user and is performed on the script execution node in the flowchart, the script information of the variable assignment instruction executed at the script execution node comprises:
displaying, in response to the first operation performed by the user on the script execution node, a first variable editing interface, wherein the first variable editing interface comprises an input text box;
receiving the information on the name of the target variable inputted by the user using the input text box; and
receiving the expression for calculating the value of the target variable inputted by the user using the input text box.

10. The method according to any one of claims 1 to 5, **characterized in that** the determining, based on the operation information of the first operation which is performed by the user and is performed on the script execution node in the flowchart, the script information of the variable assignment instruction executed at the script execution node comprises:
displaying, in response to the first operation performed by the user on the script execution node, a second variable editing interface, wherein the second variable editing interface comprises an instruction setting control corresponding to the variable assignment instruction; and
determining, based on operation information of a fourth operation performed by the user on the instruction setting control, the script information of the variable assignment instruction executed at the script execution node.

11. The method according to claim 10, **characterized in that** the determining, based on the operation information of the fourth operation performed by the user on the instruction setting control, the script information of the variable assignment instruction executed at the script execution node comprises:
displaying, in response to the fourth operation performed by the user on the instruction setting control, a third variable editing interface, wherein the third variable editing interface comprises a variable name selection control and an expression editing control;
determining, in response to a fifth operation performed by the user on the variable name selection control, the information on the name of the target variable; and
determining, in response to a sixth operation performed by the user on the expression editing control, the expression for calculating the value of the target variable.

12. The method according to any one of claims 1 to 5, **characterized in that** the script execution node comprises at least one of: a first script execution node arranged before any device node of device nodes in the automated process, or a second script execution node arranged after the device node, and
the variable assignment instruction executed at the first script execution node is executed before a primary operation of the device node is performed, and the variable assignment instruction executed at the second script execution node is executed after the primary operation of the device node is performed.

13. A method for controlling an automated process, **characterized by** comprising:
determining the script information of the variable assignment instruction executed at the script execution node in the automated process and storing the script information by using the method for editing the variable in the automated process according to any one of claims 1 to 12 before the automated process starts;
acquiring, when the automated process proceeds to the script execution node comprising the variable assignment instruction, the stored script information of the variable assignment instruction, wherein the script information of the variable assignment instruction comprises information on the name of the target variable to be assigned and the expression for calculating the value of the target variable;
performing syntax parsing on the script information of the variable assignment instruction to determine the name of the target variable and the expression; and
assigning a value to the target variable based on the name of the target variable and the expression.

14. A system for editing a variable in an automated process, **characterized by** comprising:
a display module, configured to display a process editing interface, wherein the process editing interface comprises a flowchart of the automated process;
a determination module, configured to determine, based on operation information of a first operation which is performed by a user and is performed on a script execution node in the flowchart, script information of a variable assignment instruction executed at the script execution node, wherein the script information of the variable assignment instruction comprises information on a name of a target variable to be assigned and an expression for calculating a value of the target variable; and
a storage module, configured to store the script information of the variable assignment instruction.

15. A system for controlling an automated process, **characterized by** comprising:
an editing module, configured to determine the script information of the variable assignment instruction executed at the script execution node in the automated process and storing the script information by using the method for editing the variable in the automated process according to any one of claims 1 to 12 before the automated process starts;
an acquisition module, configured to acquire, when the automated process proceeds to the script execution node comprising the variable assignment instruction, the stored script information of the variable assignment instruction, wherein the script information of the variable assignment instruction comprises information on the name of the target variable to be assigned and the expression for calculating the value of the target variable;
a determination module, configured to perform syntax parsing on the script information of the variable assignment instruction to determine the name of the target variable and the expression; and
an assignment module, configured to assign a value to the target variable based on the name of the target variable and the expression.

16. An electronic device, comprising a processor and a memory, **characterized in that** the memory stores computer program instructions, and the computer program instructions, when executed by the processor, perform the method for editing the variable in the automated process according to any one of claims 1 to 12 and/or the method for controlling the automated process according to claim 11.

17. A storage medium, storing program instructions thereon, **characterized in that** the program instructions, when executed, perform the method for editing the variable in the automated process according to any one of claims 1 to 12 and/or the method for controlling the automated process according to claim 13.
